# EUROPEAN PATENT SPECIFICATION

(11) **EP 4 340 650 B1**
(45) Date of publication and mention of the grant of the patent: **22.01.2025**
(21) Application number: 22717838.1
(22) Date of filing: 07.04.2022
(51) Int. Cl.: A24F 23/00, A24F 23/04

(54) **SNUS CONTAINER**
SNUS-BEHÄLTER
RÉCIPIENT DE SNUS

(30) Priority: 21.05.2021 SE 2150650
(43) Date of publication of application: 27.03.2024
(73) Proprietor: Sävjo Plastic AB, 576 33 Sävsjö (SE)
(72) Inventor: TOMMY, Asterhed, 576 33 SÄVSJÖ (SE)
(74) Representative: AWA Sweden AB
(86) International application number: PCT/EP2022/059247
(87) International publication number: WO 2022/242954

(56) References cited:
- EP-A1- 2 210 508
- EP-A1- 3 503 748
- EP-B1- 3 503 748
- WO-A1-2011/001284
- WO-A1-2016/202591
- WO-A1-2016/202594
- WO-A1-2018/141053

## Description

### Technical Field

The present inventive concept relates to a snus container comprising a plurality of compartments for storing packaged snus portions, a method of manufacturing a snus container, and a mould to be used in the method.

### Background

Snus is generally sold to consumers as packaged snus portions stored in a container with a resealable lid. These containers are conventionally cylindrical in shape and made of a plastic or polymer material.

After a snus portion is used, the snus portion is to be discarded, for example in a public waste bin. However, when there is no waste bin in the vicinity, there is a need to store used snus portions. A solution to this problem is to provide snus containers comprising two separate compartments. By this, unused snus portions can be stored in one compartment and used snus portions can be stored in a separate compartment. This allows used snus portions to be temporarily stored until they can be discarded in a waste bin. Such a two-compartment snus container is disclosed in e.g. EP 3503748 A1.

A problem of two-compartment snus containers is the added complexity which adds cost and complicates manufacturing and/or assembly. Snus containers of greater complexity may be more frail and thus more likely to break. Such snus containers may also be less intuitive to use. Each of these aspects may result in a frustrating user experience. It is therefore of interest to provide a two-compartment snus container of simpler design that is cheap to produce.

### Summary

It is an object of the present invention to provide an improved solution that alleviates the mentioned drawbacks with present solutions. In particular, a first object is to provide a snus container that enables an improved user experience. This object is solved by the invention as defined in claim 1. A second object is to provide a snus container that is cheap to produce and easy to assemble. This object is solved by the invention as defined in claim 1. A third object is to provide a method of manufacturing such a snus container of simpler design. This object is solved by the invention as defined in claim 7.

A fourth object is to provide a mould for use in said method. This object is solved by the invention as defined in claim 9.

According to a first aspect of the invention, a snus container is provided. The snus container comprises: a body defining a first compartment; a first lid pivotably coupled to the body to be able to pivot about a first pivot axis to and from a closing position in which the first lid closes the first compartment, the first lid defining a second compartment separated from the first compartment, and a second lid pivotably coupled to the first lid to be able to pivot about a second pivot axis to and from a closing position in which the second lid closes the second compartment, wherein the snus container is a single continuous part, preferably made from a polymer material.

By this snus container, both the first lid and the second lid remain attached to the snus container when opening the first compartment or second compartment respectively. An advantage of this is that a user does not need to hold a lid when taking out an unused snus portion from the snus container or putting in a used snus portion for temporary storage. The lid in question can simply hang from the snus container when moved from the closed position to an open position. A further advantage of this is that the lids cannot be misplaced from the snus container. Thus, in view of the above, the snus container allows for a satisfying user experience, thereby solving the first object of the invention.

Moreover, the snus container, which comprises said body, said first lid, and said second lid, is relatively simple in design compared to other two-compartment snus containers. No intricate parts are necessary which ensures a durable snus container. This snus container can be produced by e.g. injection moulding at low cost thereby solving the second object of the invention.

The snus container may be adapted in size and shape to have a form factor similar to conventional snus containers. The snus container may have a substantially cylindrical shape. The first compartment may have a substantially cylindrical shape also. The second compartment may have a substantial cylindrical shape. One of the first compartment and the second compartment may be larger than the other. The larger compartment may be intended for storing unused snus portions while the smaller compartment is intended for temporarily storing used snus portions. The first compartment may be larger than the second compartment. The second compartment may be larger than the first compartment. Alternatively, the first compartment and the second compartment have substantially the same size. In case of cylindrical geometry, the first compartment may have a larger diameter than the second compartment or vice versa. The first compartment may have a height larger than the second compartment as measured from a center of the bottom of each compartment in a vertical direction to the respective lid covering said compartment or vice versa. The height ratio of the height of the first compartment to the height of the second compartment may be about 1.0-1.5, 1.5-2.0, 2.0-2.5, 2.5-3.0, 3.0-3.5, 3.5-4.0, or alternatively about 0.2-0.4, 0.4-0.6, 0.6-0.8, 0.8-1 if the first compartment has a shorter height than the second compartment.

Moreover, the first lid may have a cylindrical body adapted to be at least partially inserted into the first compartment. The cylindrical body of the first lid may define the second compartment. The snus container may be made from a polymer material. The snus container may be made from a plastic material. Alternatively, the snus container may be made from a material comprising a metal such as aluminum, titanium, etc. In a preferred embodiment, the body, first lid and the second lid are all made from the same material.

By single continuous part, it may be meant a single part of continuous material, i.e. the body and the first lid are seamlessly connected, and the first lid and the second lid are seamlessly connected. The snus container may be formed as a single continuous part by means of injection moulding. By this, the snus container requires no assembly after manufacturing. Thus, the snus container is cheap to produce, thereby further solving the second object of the invention.

By pivot joint, it may be meant a joint having one degree of freedom of motion or two degrees of freedom of motion. Moreover, the pivot joint may be a snap-in pivot joint, i.e. a joint comprising a receiving part, such as a slot, and a pivot part, such as a rod, wherein the pivot part is adapted to be inserted into the receiving part along a direction not parallel to the pivot axis, e.g. in a direction perpendicular to the pivot axis, but maintained in the receiving part in a latching manner. The pivot joint may alternatively be other known conventional pivot joints, such as a screw joint.

According to one embodiment, the first pivot axis and the second pivot axis are parallel. The snus container may be adapted in size and shape so that the first pivot axis and the second pivot axis are offset from one another. This may result in a snus container which is more easily manufactured, thereby reducing manufacturing cost.

According to one embodiment, the first lid is pivotably coupled to the body by means of a first pivot coupling, and the second lid is pivotably coupled to the first lid by means of a second pivot coupling, wherein the first and/or the second pivot coupling is/are located along an outwardly facing side edge of the first lid. This design may be more easily manufactured. The first pivot coupling and the second pivot coupling may be of the same material as the rest of the snus container.

According to one embodiment, the first and second pivot couplings are located on opposite sides of the outwardly facing side edge of the first lid. Alternatively, the first and second pivot couplings may be located along the outwardly facing side of the first lid with an offset angle between them that is less than 180 degrees, for example 0-15 degrees, 15-30 degrees, 30-45 degrees, 45-60 degrees, 60-75 degrees, 75-90 degrees, 90-105 degrees, 105-120 degrees, 120-145 degrees, 145-150 degrees, 150-165 degrees, 165-180 degrees. The offset angle may be selected for improving user experience and/or selected based on manufacturing setup, such as limitation on spatial extend of an injection mould to be used.

According to one embodiment, the first and/or second pivot coupling is a bendable strip. By this, the first lid or the second lid may be easily moved between the closed position and an open position at which the first or second compartment may be accessed. The bendable strip may comprise one or more predetermined slits or folding lines which facilitate pivotable motion of a lid. The bendable strip may have a geometry, i.e. width, length, thickness, tapering along extension to or from the first lid, that allows a satisfying durability during normal use to be achieved. By normal use, it may be meant normal consumer use, i.e. opening and closing the first and/ or second lid without excessively pulling or otherwise tampering with said lids. Alternatively, in the case where not the whole snus container is a single continuous part, one or both of the first and second pivot couplings may be a pivot joint previously mentioned.

According to one embodiment, the first lid and/or the second lid is provided with a latching mechanism for maintaining said lid or lids in the respective closed position in a latching manner. By this, the lids may be kept in a closed position.

According to one embodiment, the latching mechanism is provided by a protrusion adapted to engage with a recess. The latching mechanism for the first lid may be provided by a protrusion adapted to engage with a recess. The protrusion may be arranged to the lid or the body defining the first compartment. The recess may be arranged to the other of the lid or body respectively depending on configuration. In the case of cylindrical geometry of the snus container, the protrusion and recess may extend in a circumferential direction, at least partly. Thus, when the first lid is moved towards the closed position, the protrusion snaps into place in the recess. The latching mechanism for the second lid may be of similar design.

According to a second aspect of the invention, a method of manufacturing the snus container according to the first aspect or any embodiments thereof is provided. The method comprises the steps of: providing a mould defining a plurality of mould cavities corresponding to the shapes of the body, first lid and second lid of the snus container; injecting a material into the plurality of mold cavities, and once solidified, ejecting the snus container from the mould. By this, a snus container of simple design may be provided, thereby solving the third object of the invention.

The material may be injected into the plurality of mold cavities by means of one or more nozzles adapted to guide material into said mould cavities. The material may be injected by means of an injection device. The material may be heated to a melting temperature so as it becomes a fluid. When cooled, the material then solidifies in said cavities.

According to the invention the snus container is formed as a single continuous part, preferably made from a plastic or polymer material. This may be realized by using an injection mould wherein the various mould cavities are interconnected by small passageways. These may correspond to the first and second pivot coupling of the snus container. When solidified, the snus container is fully formed. Alternatively, the snus container may be made from a material comprising a metal such as aluminum, titanium, etc. In a preferred embodiment, the body, first lid and the second lid are all made from the same material.

According to a third aspect of the invention, a mould is provided. The mould defines a plurality of mould cavities corresponding to the shapes of the body, first lid and second lid of the snus container according to the first aspect or any embodiments thereof. By this, the fourth object of the invention is solved. The mould may be adapted to be used in the method of the second aspect.

The mould may comprise a first mould part and a second mould part. The first part may be an upper part while the second part may be a lower part, or vice versa. The first and second mould part may be adapted to be pressed together to form said mould cavities corresponding to the shape of the snus container. The first part may be adapted in shape and size to define a plurality of recesses adapted to receive protrusions respectively of the second part when the first and second part are pressed together. The recesses and protrusions may together define mould cavities corresponding to the body, first lid, and second lid of the snus container. The first and/or second part may further define passageways interconnecting the recesses corresponding to shape of first and/or second pivot coupling. The mould may be adapted to connect with a nozzle for guiding material into the mould cavities. The mould may further be adapted with one or more injector pins for ejecting the snus container once solidified.

The invention is defined by the appended independent claims, with embodiments being set forth in the appended dependent claims, in the following description and in the drawings.

### Brief Description of the Drawings

The invention will in the following be described in more detail with reference to the enclosed drawings, wherein:
Fig. 1 shows a perspective view of a snus container according to one embodiment of the invention;
Figs. 2a, 2b show perspective views of a snus container according to one embodiment of the invention when in an unfolded state;
Figs. 3a, 3b show a top view and a bottom view of the snus container according to one embodiment of the invention when in an unfolded state;
Fig. 4a shows a perspective view of the snus container according to one embodiment of the invention when in an unfolded state;
Figs. 4b, 4c show zoomed in views of the pivot couplings of the snus container according to one embodiment of the invention;
Fig. 5 shows a cross sectional view of the snus container according to one embodiment of the invention when in a folded state;
Fig. 6 shows a flow chart of a method of manufacturing a snus container according to one embodiment of the invention;
Fig. 7 shows a cross sectional view of a mould used during the method of manufacturing a snus container according to one embodiment of the invention.

### Description of Embodiments

The present invention will be described more fully hereinafter with reference to the accompanying drawings, in which preferred embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. In the drawings, like numbers refer to like elements.

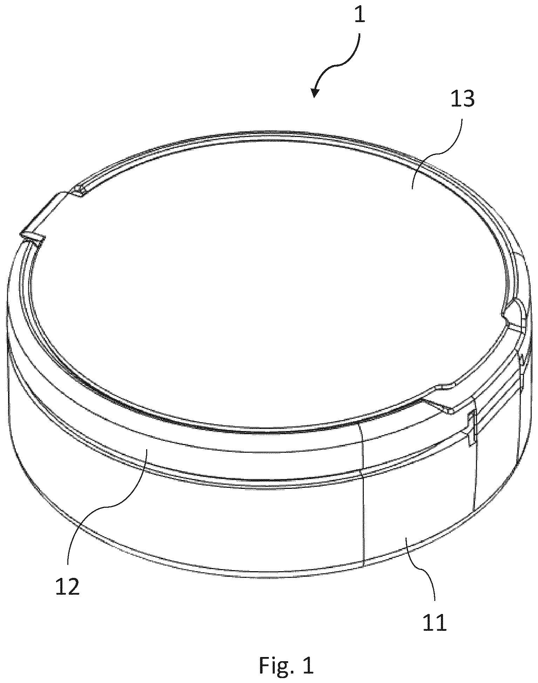

Fig. 1 shows a perspective view of a snus container 1 according to one embodiment of the invention. The snus container 1 comprises a body 11 defining a first compartment 110. The snus container 1 further comprises a first lid 12. The first lid is pivotably coupled to the body 11 to be able to pivot about a first pivot axis P1 to and from a closing position in which the first lid 12 closes the first compartment 110. In Fig. 1, the first lid 12 is in the closed position, thereby closing the first compartment 110 defined by the body 11. The first lid 12 also defines a second compartment 120 separated from the first compartment 110. The snus container 1 further comprises a second lid 13 pivotably coupled to the first lid 12 to be able to pivot about a second pivot axis P2 to and from a closing position in which the second lid 13 closes the second compartment 120. In Fig. 1, the second lid 13 is in the closed position, thereby closing the second compartment 120.

As further shown in Fig. 1, the snus container 1 is substantially cylindrical in shape similar to the conventional design of current snus containers. Both the first lid 12 and the second lid 13 is adapted with a circular shape. Moreover, the top edge and bottom edge of the snus container are slightly curved. Such a design without any sharp edges makes it more comfortable to hold and carry around in a pocket of clothing. The snus container 1 is however not limited to such design and may be provided in alternative shapes as necessary.

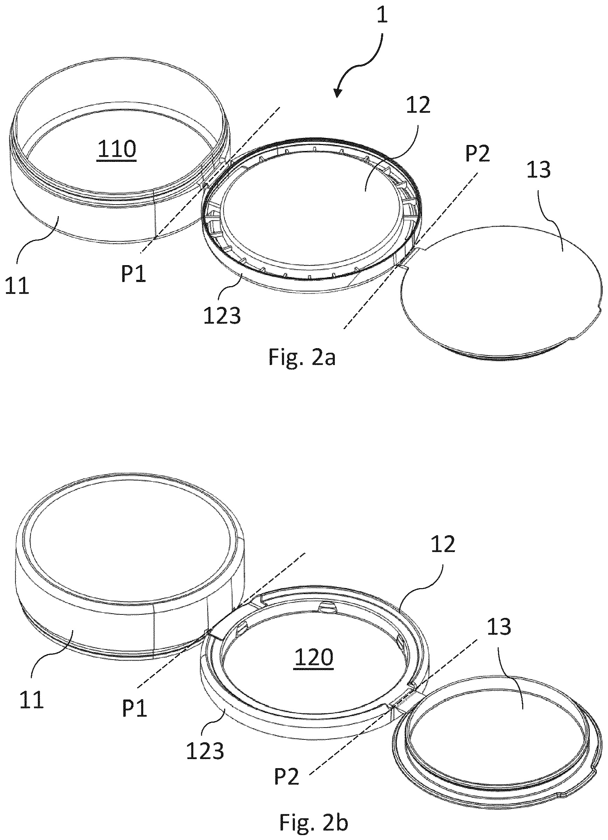

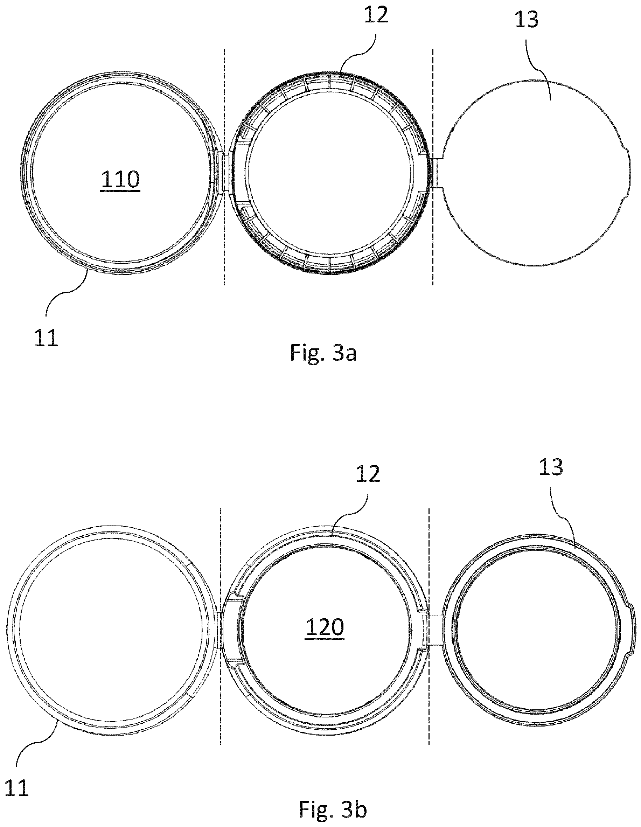

Figs. 2a, 2b show perspective views of a snus container 1 according to one embodiment of the invention when in an unfolded state. Unfolded state refers to the state when the body 11, the first lid 12, and the second lid 13 are aligned along a plane. Fully folded state refers to the state when both the first lid 12 and the second lid 13 are each in their respective closed position, i.e. the state shown in Fig. 1. Moreover, Figs. 3a, 3b show a top view and a bottom view of the snus container 1 according to one embodiment of the invention when in said unfolded state.

As stated, the first lid 12 is pivotably coupled to the body 11 to be able to pivot about the first pivot axis P1 to and from a closing position in which the first lid 12 closes the first compartment 110. The second lid 13 is pivotably coupled to the first lid 12 to be able to pivot about the second pivot axis P2 to and from a closing position in which the second lid 13 closes the second compartment 120. In one embodiment, the snus container 1 is a single continuous part, preferably made from a plastic or polymer material. Furthermore, in one embodiment, the first pivot axis P1 and the second pivot axis P2 are parallel.

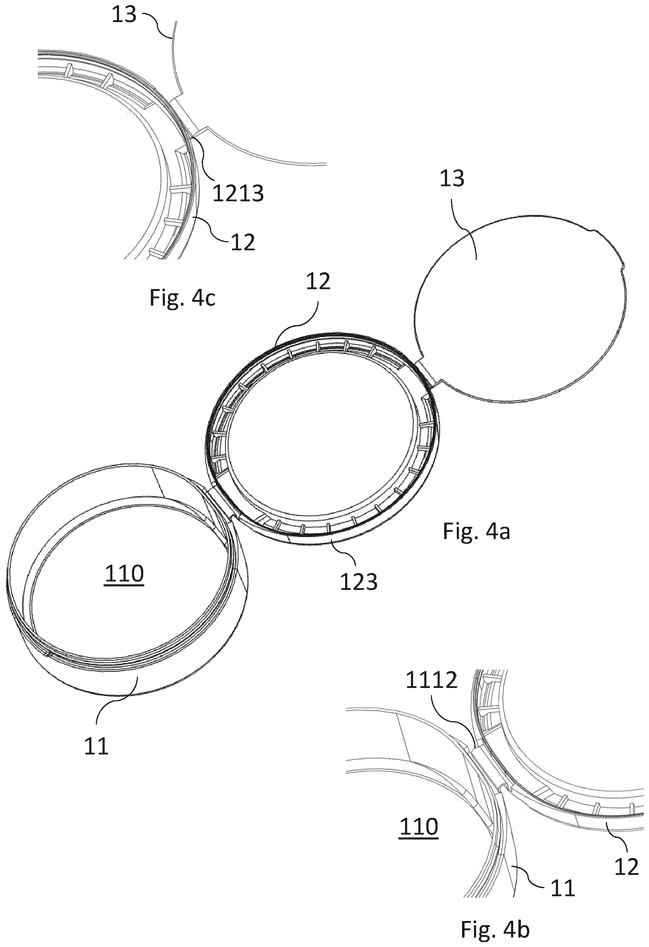

Fig. 4a shows a perspective view of the snus container 1 according to one embodiment of the invention when in an unfolded state. Figs. 4b, 4c show zoomed in views of the pivot couplings 1112, 1213 of the snus container 1 according to one embodiment of the invention. The first lid 12 is pivotably coupled to the body 11 by means of a first pivot coupling 1112. The second lid 13 is pivotably coupled to the first lid 12 by means of a second pivot coupling 1213. In the embodiment depicted in Fig. 4a, both the first pivot coupling 1112 and the second pivot coupling 1213 are located along an outwardly facing side edge 123 of the first lid 12. Moreover, both the first and second pivot coupling 1112, 1213 are bendable strips. The bendable strips continuously extend from the body 11 to the first lid 12, and from the first lid 12 to the second lid 13 respectively. In order to facilitate bending of the bendable strips, predetermined cuts and/or folding lines may be provided.

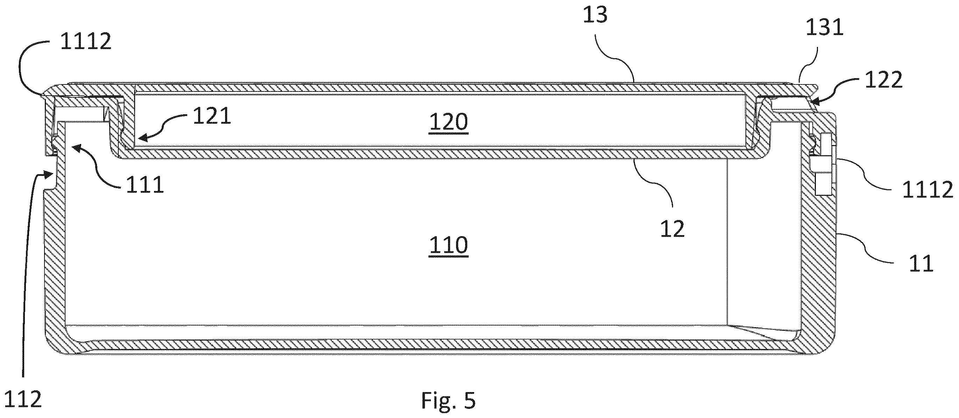

Fig. 5 shows a cross sectional view of the snus container 1 according to one embodiment of the invention when in a folded state. As shown, when the snus container 1 is in the fully folded state, the first compartment 110 and the second compartment 120 are arranged next to each other or on top of each other but separated from one another by the first lid 12. Thus, unused snus portions and used snus portions may be stored in the same snus container without coming in contact with each other. Both the first compartment 110 and the second compartment 120 have substantially cylindrical shapes. The first compartment 110 has a larger diameter than the second compartment 120. The first compartment 110 also has height larger than the second compartment 120 as measured from a center of the bottom of each compartment in a vertical direction to the respective lid covering said compartment. The height ratio of the height of the first compartment 110 to the height of the second compartment 120 may be about 1-4. In the embodiment depicted in Fig. 5, the height ratio is about 3,25. The larger compartment of the first compartment 110 and the second compartment 120 may be intended for storing unused snus portions. The smaller compartment of the first compartment 110 and the second compartment 120 may be intended for storing used snus portions. A smaller compartment may be preferred for storing used snus portions as a user only needs to store used snus temporarily, thus only a smaller space is needed.

Moreover, the first lid 12 and the second lid 13 are provided with a latching mechanism 111, 121 for maintaining said lids in the respective closed position in a latching manner. The latching mechanisms may be provided by a protrusion adapted to engage with a recess. In the embodiment shown in Fig. 5, the first lid 12 comprises one such recess extending in a circumferential direction along a side surface facing towards a center of the first lid 12. The side surface facing towards the center of the first lid 12 is arranged on the opposite side of the outwardly facing side surface of the first lid 12. The body 11 comprises a protrusion extending in a circumferential direction along a side surface facing outwardly from a center of the body 11. Said recess of the first lid 12 is adapted to receive said protrusion of the body 11 and together form the first latching mechanism 111. As an alternative, the body 11 may be provided with a recess and the first lid 12 may be provided with a protrusion which together form the first latching mechanism.

In the embodiment shown in Fig. 5, the first lid 12 comprises a recess extending in a circumferential direction along an inner wall of the second compartment 120. The second lid 13 comprises a protrusion extending in a circumferential direction along a side surface of a wall member of the second lid 13 adapted to be received in the second compartment 120 when the second lid 13 is in the closed position. The protrusion faces away from a center of the second lid 13. Said recess of the first lid 12 is adapted to receive said protrusion of the second lid 13 and together form the second latching mechanism 121. As an alternative, the first lid 12 may be provided with the protrusion and the second lid 13 may be provided with the recess.

Moreover, in order to facilitate opening the first lid 12, the body 11 may be designed with an indentation such that a side edge of the first lid 12 may be accessed. Likewise, in order to facilitate opening the second lid 13, the body 11 and/or first lid 12 may be designed with an indentation such that a tab 131 may be accessed.

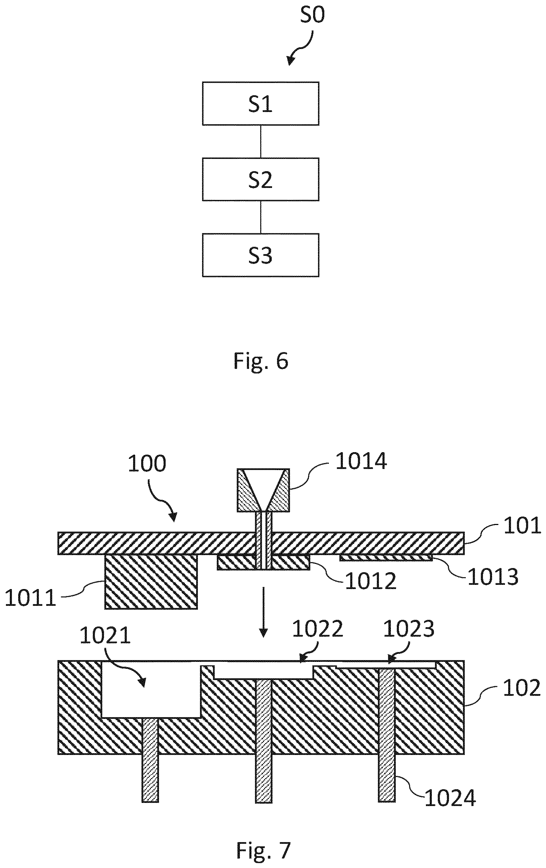

Fig. 6 shows a flow chart of a method S0 of manufacturing a snus container 1 according to one embodiment of the invention. The method S0 comprises the steps of providing S1 a mould 100 defining a plurality of mould cavities 1021, 1022, 1023 corresponding to the shapes of the body 11, the first lid 12 and second lid 13 of the snus container 1; injecting a material into the plurality of mold cavities 1021, 1022, 1023, and once solidified, ejecting the snus container 1 from the mould 100. The snus container 1 is formed as a single continuous part, preferably made from a plastic or polymer material.

Fig. 7 shows a cross sectional view of a mould 100 used during the method S0 of manufacturing a snus container 1 according to one embodiment of the invention. The mould 100 comprises an upper mould part 101 and a lower mould part 102. The lower mould part 102 is adapted in shape and size to define a plurality of recesses 1021, 1022, 1023 adapted to receive protrusions 1011, 1012, 1013 respectively of the upper mould part 101 when the upper mould part 101 and the lower mould part 102 are pressed together. The recesses and protrusions together define mould cavities corresponding to the body 11, first lid 12, and second lid 13 of the snus container 1. A nozzle 1014 guides material into the mould cavities. Once the snus container 1 has solidified, the snus container 1 is ejected by ejection pins 1024. Preferably, the material used is a plastic or polymer material.

In the drawings and specification, there have been disclosed preferred embodiments and examples of the invention and, although specific terms are employed, they are used in a generic and descriptive sense only and not for the purpose of limitation, the scope of the invention being set forth in the following claims.

## Claims

1. A snus container (1), comprising:
a body (11) defining a first compartment (110);
a first lid (12) pivotably coupled to the body (11) to be able to pivot about a first pivot axis (P1) to and from a closing position in which the first lid (12) closes the first compartment (110), the first lid (12) defining a second compartment (120) separated from the first compartment (110), and
a second lid (13) pivotably coupled to the first lid (12) to be able to pivot about a second pivot axis (P2) to and from a closing position in which the second lid (13) closes the second compartment (120),
wherein the snus container (1) is a single continuous part.

2. Snus container (1) according to claim 1, wherein the first pivot axis (P1) and the second pivot axis (P2) are parallel.

3. Snus container (1) according to any preceding claims, wherein the first lid (12) is pivotably coupled to the body (11) by means of a first pivot coupling (1112), and the second lid (13) is pivotably coupled to the first lid (12) by means of a second pivot coupling (1213), wherein the first and/or the second pivot coupling (1112, 1213) is/are located along an outwardly facing side edge (123) of the first lid (12).

4. Snus container (1) according to claim 3, wherein the first and second pivot couplings (1112, 1213) are located on opposite sides of the outwardly facing side edge (123) of the first lid (12).

5. Snus container (1) according to any of claims 3-4, wherein the first and/or second pivot coupling (1112, 1213) is a bendable strip.

6. Snus container (1) according to any preceding claims, wherein the first lid and/or the second lid (12, 13) is provided with a latching mechanism (111, 121) for maintaining said lid or lids (12, 13) in the respective closed position in a latching manner.

7. Method (S0) of manufacturing the snus container (1) according to any preceding claims, comprising the steps of:
providing (S1) a mould (100) defining a plurality of mould cavities (1021, 1022, 1023) corresponding to the shapes of the body (11), first lid (12) and second lid (13) of the snus container (1);
injecting a material into the plurality of mold cavities (1021, 1022, 1023), and
once solidified, ejecting the snus container (1) from the mould (100).

8. Method (S0) according to claim 7, wherein the snus container (1) is formed as a single continuous part.

9. A mould (100) defining a plurality of mould cavities (1021, 1022, 1023) corresponding to the shapes of the body (11), first lid (12) and second lid (13) of the snus container (1) according to any of claims 1-6.

## Patentansprüche

1. Snus-Behälter (1), umfassend:
einen Körper (11), der ein erstes Fach (110) definiert;
einen ersten Deckel (12), der schwenkbar an den Körper (11) gekoppelt ist, damit er um eine erste Schwenkachse (P1) zu einer Schließposition, in der der erste Deckel (12) das erste Fach (110) schließt, und aus dieser heraus schwenken kann, wobei der erste Deckel (12) ein zweites Fach (120) definiert, das von dem ersten Fach (110) getrennt ist, und
einen zweiten Deckel (13), der schwenkbar an den ersten Deckel (12) gekoppelt ist, damit er um eine zweite Schwenkachse (P2) zu einer Schließposition, in der der zweite Deckel (13) das zweite Fach (120) schließt, und aus dieser heraus schwenken kann,
wobei der Snus-Behälter (1) ein einzelnes kontinuierliches Teil ist.

2. Snus-Behälter (1) nach Anspruch 1, wobei die erste Schwenkachse (P1) und die zweite Schwenkachse (P2) parallel sind.

3. Snus-Behälter (1) nach einem der vorhergehenden Ansprüche, wobei der erste Deckel (12) mittels einer ersten Schwenkkopplung (1112) schwenkbar an den Körper (11) gekoppelt ist, und der zweite Deckel (13) mittels einer zweiten Schwenkkopplung (1213) schwenkbar an den ersten Deckel (12) gekoppelt ist, wobei die erste und/oder die zweite Schwenkkopplung (1112, 1213) sich entlang eines nach außen weisenden Seitenrands (123) des ersten Deckels (12) befindet bzw. befinden.

4. Snus-Behälter (1) nach Anspruch 3, wobei die erste und die zweite Schwenkkopplung (1112, 1213) sich auf entgegengesetzten Seiten des nach außen weisenden Seitenrands (123) des ersten Deckels (12) befinden.

5. Snus-Behälter (1) nach einem der Ansprüche 3 bis 4, wobei die erste und/oder zweite Schwenkkopplung (1112, 1213) ein biegbarer Streifen ist bzw. sind.

6. Snus-Behälter (1) nach einem der vorhergehenden Ansprüche, wobei der erste Deckel und/oder der zweite Deckel (12, 13) mit einem Einrastmechanismus (111, 121) ausgestattet ist bzw. sind, um den Deckel oder die Deckel (12, 13) einrastend in der jeweiligen geschlossenen Position zu halten.

7. Verfahren (S0) zur Fertigung des Snus-Behälters (1) nach einem der vorhergehenden Ansprüche, umfassend die Schritte:
Bereitstellen (S1) eines Formwerkzeugs (100), das eine Vielzahl von Formwerkzeughohlräumen (1021, 1022, 1023) definiert, die den Formen des Körpers (11), ersten Deckels (12) und zweiten Deckels (13) des Snus-Behälters (1) entsprechen;
Spritzen eines Materials in die Vielzahl der Formwerkzeughohlräume (1021, 1022, 1023) und
Auswerfen des Snus-Behälters (1), nachdem dieser erstarrt ist, aus dem Formwerkzeug (100).

8. Verfahren (S0) nach Anspruch 7, wobei der Snus-Behälter (1) als einzelnes kontinuierliches Teil gebildet ist.

9. Formwerkzeug (100), das eine Vielzahl von Formwerkzeughohlräumen (1021, 1022, 1023) definiert, die den Formen des Körpers (11), ersten Deckels (12) und zweiten Deckels (13) des Snus-Behälters (1) nach einem der Ansprüche 1 bis 6 entsprechen.

## Revendications

1. Récipient de snus (1), comprenant :
un corps (11) définissant un premier compartiment (110) ;
un premier couvercle (12) couplé de manière pivotante au corps (11) pour pouvoir pivoter autour d'un premier axe de pivotement (P1) depuis et vers une position de fermeture dans laquelle le premier couvercle (12) ferme le premier compartiment (110), le premier couvercle (12) définissant un second compartiment (120) séparé du premier compartiment (110), et
un second couvercle (13) couplé de manière pivotante au premier couvercle (12) pour pouvoir pivoter autour d'un second axe de pivotement (P2) depuis et vers une position de fermeture dans laquelle le second couvercle (13) ferme le second compartiment (120),
le récipient de snus (1) étant une seule partie continue.

2. Récipient de snus (1) selon la revendication 1, le premier axe de pivotement (P1) et le second axe de pivotement (P2) étant parallèles.

3. Récipient de snus (1) selon l'une quelconque des revendications précédentes, le premier couvercle (12) étant couplé de manière pivotante au corps (11) au moyen d'un premier couplage pivotant (1112), et le second couvercle (13) étant couplé de manière pivotante au premier couvercle (12) au moyen d'un second couplage pivotant (1213), le premier et/ou le second couplage pivotant (1112, 1213) étant situés le long d'un bord latéral orienté vers l'extérieur (123) du premier couvercle (12).

4. Récipient de snus (1) selon la revendication 3, le premier et le second couplage pivotants (1112, 1213) étant situés sur des côtés opposés du bord latéral orienté vers l'extérieur (123) du premier couvercle (12).

5. Récipient de snus (1) selon l'une quelconque des revendications 3 à 4, le premier et/ou le second couplage pivotant (1112, 1213) étant une bande pliable.

6. Récipient de snus (1) selon l'une quelconque des revendications précédentes, le premier couvercle et/ou le second couvercle (12, 13) étant pourvu d'un mécanisme de verrouillage (111, 121) pour maintenir ledit ou lesdits couvercles (12, 13) dans la position fermée respective de manière verrouillée.

7. Procédé (S0) de fabrication du récipient de snus (1) selon l'une quelconque des revendications précédentes, comprenant les étapes de :
la fourniture (S1) d'un moule (100) définissant une pluralité de cavités de moule (1021, 1022, 1023) correspondant aux formes du corps (11), du premier couvercle (12) et du second couvercle (13) du récipient de snus (1) ;
l'injection d'un matériau dans la pluralité de cavités de moule (1021, 1022, 1023), et
une fois solidifié, l'éjection du récipient de snus (1) du moule (100).

8. Procédé (S0) selon la revendication 7, le récipient de snus (1) étant formé comme une seule partie continue.

9. Moule (100) définissant une pluralité de cavités de moule (1021, 1022, 1023) correspondant aux formes du corps (11), du premier couvercle (12) et du second couvercle (13) du récipient de snus (1) selon l'une quelconque des revendications 1 à 6.
